(19) Europäisches Patentamt
European Patent Office
Office européen des brevets

(11) **EP 4 280 011 A1**

(12) **EUROPEAN PATENT APPLICATION**

(43) Date of publication:
**22.11.2023 Bulletin 2023/47**

(21) Application number: **22382477.2**

(22) Date of filing: **18.05.2022**

(51) International Patent Classification (IPC):
***G05D 1/02*** *(2020.01)*

(52) Cooperative Patent Classification (CPC):
**G05D 1/0234;** G05D 2201/0201

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Consejo Superior de Investigaciones Científicas (CSIC)**
**28006 Madrid (ES)**
• **Universidad Politécnica De Madrid**
**28040 Madrid (ES)**

(72) Inventors:
• **RIBEIRO SEIJAS, Ángela**
**28500 Arganda del Rey (ES)**
• **CONEJERO RODRÍGUEZ, María Nuria**
**28500 Arganda del Rey (ES)**
• **MONTES FRANCESCHI, Héctor**
**28500 Arganda del Rey (ES)**
• **ANDÚJAR SÁNCHEZ, Dionisio**
**28500 Arganda del Rey (ES)**
• **BENGOCHEA GUEVARA, José María**
**28500 Arganda del Rey (ES)**
• **TODESCHINI DINOLFO, Mariano Fabián**
**28500 Arganda del Rey (ES)**

(74) Representative: **TRBL Intellectual Property**
**Glorieta de Quevedo, 8**
**28015 Madrid (ES)**

(54) **AUTONOMOUS ROBOTIC ASSISTANCE SYSTEM AND METHOD IN AGRICULTURAL TASKS**

(57) The invention relates to a novel assistance system (1) suitable for being used in agricultural tasks, designed for following a user (12) specific such that said user may harvest agricultural material by then depositing it in the system (1) without having to carry it, wherein said system (1) comprises a processing unit (2), a robotic device (3) and a secondary locating device (13) suitable for being worn by a user (12). The robotic device (3) comprises a platform (4), a weighing sensor (6) and at least two (11) primary locating devices, all being configured for sending and receiving information with the processing unit (2), as well as a storage element (7). Additionally, the system (1) comprises image acquisition means (10), for detecting an article of clothing (14) worn by the user (12), also comprised in the system (1) of the invention.

FIG. 1

EP 4 280 011 A1

**Description**

**TECHNICAL FIELD OF THE INVENTION**

The present invention is comprised in the field of collaborative robotics applied to performing tasks related to the agricultural sector. More specifically, the invention relates to a robotic system which operates autonomously intended for helping an operator with tasks performed on a farm, such as tasks for following, transport and/or monitoring, with the main field of application being the wine-making industry.

**BACKGROUND OF THE INVENTION**

The last few decades have seen a considerable increase in the integration of robotics into the workplace, allowing these autonomous, "intelligent machines" to take on the most tedious and repetitive tasks or those that may pose a danger to humans.

This technological revolution has contributed to the exponential growth of robotics and the development of new applications for it, making it possible for tasks that initially could only be performed by humans to also be undertaken by robots, such as decision-making or social interactions. The possibilities offered by robots and the innovation they bring are increasingly greater, to the point where they are becoming part of our day-to-day activities and of many industrial sectors. As a result of this rapid advance in technology, their ever-decreasing cost and the need to automate tasks, the use of robots to perform the hardest or most tedious functions has increased, especially in sectors such as construction or agriculture.

In the latter case, i.e., the agricultural sector, the presence of robotics is not so high due to the difficulties presented by its environment, such as mobility over irregular and nonhomogeneous terrain, changing and sometimes extreme weather conditions, the variation in lighting when dealing with outdoor environments, the need to operate during long working days depending on the periods of each crop, or the difficulty of connectivity in the field.

The first benefits of the incorporation of technology in the agricultural world have been the partial automation of tasks such as sowing or irrigation, the correct use of fertilizers or even the harvesting of the crop, all this with the aim of achieving a higher yield at a lower cost and effort, but without sacrificing product quality.

However, although 40% of the tasks in this sector are expected to be automated by 2050, today most of this technology still requires the farmer or staff to make a physical effort, albeit less than when tasks are performed manually. This is where robotics for agriculture becomes important, since the demand for products and consumption is increasing, while the available labor force is decreasing due to the conditions involved in working in this environment.

Agricultural robots for harvesting or picking fruits and vegetables such as tomatoes, peppers, apples, strawberries, grapes or oranges, have always been an objective within the field of research for marketing purposes. However, despite the fact that the speed of tasks such as locating and picking has improved considerably in the last few years, the speed at which the products can be picked and sorted has been considerably improved in the last few years (see Feng, Q. et al. (2018) "Design and test of robotic harvesting system for cherry tomato", International Journal of Agricultural and Biological Engineering, 11(1), 96-100; Arad, B. et al. (2020) "Development of a sweet pepper harvesting robot', Journal of Field Robotics, 37(6), 1027-1039; Xiong, Y. et al. (2020) "An autonomous strawberry-harvesting robot: Design, development, integration, and field evaluation", Journal of Field Robotics, 37(2), 202-224; Williams, H. et al. (2020), "Improvements to and large-scale evaluation of a robotic kiwifruit harvester", Journal of Field Robotics, 37(2), 187-201; Birrell, S. et al. (2020) "A field-tested robotic harvesting system for iceberg lettuce", Journal of Field Robotics, 37(2), 225-245; or Vrochidou, E. et al. (2021) "An Autonomous Grape-Harvester Robot: Integrated System Architecture", Electronics, 10(9), 1056), the high cost of these robots or the robustness required in an agricultural environment is the reason why they are not yet available on the market (although there are devices available to assist in this process capable of counting the harvested product and assessing its quality or state of maturity).

Finally, the possibility of performing both tasks with the same robotic system is currently one of the main challenges in agricultural robotics. Due to the particularity of each type of crop, product or terrain, robots are usually designed to perform a specific task and operate independently. Therefore, there is a great research focus on combining both abilities in multipurpose robots or employing these robots in a cooperative or collaborative way in order to make the use of robots in the agricultural sector profitable in terms of efficiency and economy.

In this sense, and as robotics is capable of taking on the most repetitive, physical, monotonous or even dangerous jobs, jobs are being transformed, giving rise to more creative tasks or tasks related to the integration of these robots, helping to understand robots as a machine for assisting or complementing the human to obtain the best possible performance when performing a task, thus giving rise to the concept of human-robot collaboration and consequently the concept of collaborative robot.

A collaborative robot is a robot that works in a shared space with a human, with the aim of combining the advantages of robots and their automation capacity with the skills that humans have and that are difficult to reproduce using robots. In addition, with the improvement of cognitive and visual skills in the field of robotics, this human-robot collaboration is becoming increasingly important, allowing a safe and efficient combination of the skills of both in a beneficial way, reaching applications where full automation presents many difficulties.

The existence of fully autonomous crops where robots work simultaneously has not been achieved to date. The reason, again, is the field conditions, the limitations of robotics or the large investment involved in having a fleet of robots. Consequently, the possibility of a human-robot collaboration where both share a space and interaction is prioritized in tasks such as harvesting or transport, where the physical effort falls mainly on the robot and the human is in charge of supervising or even commanding the robot to some extent, is particularly interesting.

One case where this collaborative robot system is particularly interesting is in the wine industry. Manual harvesting, like any other manual fruit or vegetable picking process, requires great physical effort during long working days and under different weather conditions. The location of the bunches of grapes in some vineyards requires extra effort on the part of the grape harvester as they are close to the ground and, in addition, as in many crops, the terrain may present irregularities or variable conditions such as humidity and dust. Therefore, the use of robotics to improve and/or automate these processes and other tasks in vineyards can be a great advantage for both the farm and grape harvesters.

However, there are currently few commercial robots suitable for working in vineyards (see Peng, C. et al. (2021) "A strawberry harvest-aiding system with crop-transport co-robots: Design, development, and field evaluation". arXiv preprint arXiv:2107.13063; or Johan F. et al. (2018) "Raspberry-robotic and autonomous systems for berry production". Mechanical Engineering, 140(06), S14-S18.), and in particular for the harvesting process, due in part to the complexity of the task and the importance of preserving the quality and care of the grapes when introducing robotics, especially taking into account that they are considered highly profitable fruits.

For all these reasons, the development of ground robotic platforms for harvesting and transporting grapes continues to be a necessity, since both tasks are the ones that most benefit operators and production. Manual picking requires great physical effort on the part of the grape harvester, since they are also responsible for transporting the cases containing the grapes from row to row until they are full. In addition, due to the heavy weight, the harvest cases or baskets are often not picked until the end of the day, which can be up to 6 hours later, so the use of a robot would benefit the vineyard in terms of logistics, grape quality and employee welfare.

Nowadays, harvest mechanization processes consist of applying different vibrations depending on the crop being harvested, which does not ensure that the quality of the grapes will not be affected by the impact or that all the bunches will be detached, which is why robotics seeks to reproduce the way in which the operator picks the bunches.

Although robots capable of this picking already exist, they are not as fast as an operator, are not robust and are very expensive. The door to an intermediate and feasible solution in the short term is therefore open. Again, human-robot collaboration and the combination of skills can be a great ally.

For all these reasons, there is a need to develop a robotic platform that is feasible and economically profitable in the short term to help in this process of grape harvesting or in the harvesting of other fruits, where the best option is to combine the manual dexterity of the operator and avoid the physical effort of transport by means of a robot, thus combining the best qualities of both and not replacing the operator's skill.

In order to meet all these needs and to improve the quality of work in agriculture, especially in the wine-making sector, the present invention proposes an autonomously operating robotic system intended to assist an operator in the tasks of following, transporting and monitoring that are performed on a farm.

## BRIEF DESCRIPTION OF THE INVENTION

To solve the limitations of the state of the art described above, the object of the present invention is to provide a novel assistance system suitable for being used in agricultural tasks, where said system comprises a processing unit, a robotic device and a secondary locating device.

For the correct operation of the system, the processing unit is configured for data acquisition, storage and processing, and can be arranged both on the robotic device and independently thereof. Furthermore, in a preferred embodiment of the invention, the processing unit acts like a centralized unit, acquiring, storing and processing the data of more than one robotic device.

The robotic device comprises:

- a platform configured for being moved and for sending and receiving information with the processing unit, further comprising movement means;
- a storage element arranged on the platform;
- a weighing sensor comprising communication means for communicating with the processing unit configured for measuring the weight of the storage element and its content; and
- at least two primary locating devices arranged integrally with the platform; and

Lastly, the secondary locating device is configured for sending and receiving data with the primary locating devices, said secondary locating device being suitable for being worn by a user.

The system of the invention is designed (although not in a limiting manner as it is suitable for being applied to other tasks) for following a specific user such that said user may harvest agricultural material by then depositing it in the system. Therefore, the user does not have to carry heavy material when performing the task and can focus his or her efforts on harvesting. Therefore, the system allows, in a completely autonomous manner, i.e., without requiring human intervention while performing the task, a robotic device with storage capacity specifically to follow an operator it identifies to assist him or her in tasks such as the transport or carrying of materials. For this reason, the system of the invention acts in a collaborative manner with the user, allowing the user to employ less effort as well as reduced times for performing the task. Furthermore, the system advantageously allows the material harvested while performing the task to be weighed.

In another preferred embodiment of the invention, the assistance system additionally comprises image acquisition means, preferably comprising at least two RGB cameras and an infrared camera and configured for gathering information about distance and/or depth, which in turn comprise communication means for communicating with the processing unit. In this preferred embodiment of the invention, the system also comprises an article of clothing, preferably a vest or clothing with a large surface area, made from a reflective material. This is appropriate because reflective vests are used on most farms as a safety measure for users. The article of clothing is preferably an intense color, where the best results are obtained with the color orange.

The advantage of the use of the image acquisition means and of the article of clothing worn by the user is that said means can be used, in cooperation with the primary and secondary locating devices, to identify the user more efficiently. First, it can efficiently be determined if the user is in the field of view of the image acquisition means, and the decision-making and the actuation of the robotic device can be programmed based on if the answer is yes or no. Furthermore, as a result of the article of clothing, the user can be distinguished from other obstacles captured by the image acquisition means, such as the crops themselves. Moreover, different obstacles with which the robotic device must act one way or another, according to the requirement of the task, can even be distinguished after processing the obtained images.

In another preferred embodiment of the invention, the assistance system comprises at least two robotic devices, and this number can be increased to improve efficiency in the corresponding agricultural task. As set forth above, these devices could be controlled by a single central processing unit, or by more than one, each of which is located on a corresponding platform.

In another preferred embodiment of the invention, at least one of the communication means comprised in the assistance system is wireless, preferably operating by means of Wi-Fi or

Bluetooth connections, although greater autonomy of the system is obtained in the event that all the communication means are wireless.

In another preferred embodiment of the invention, the weighing sensor of the assistance system exhibits a precision equal to or greater than 5 g, i.e., it is capable of distinguishing weight variations in intervals of, at most, 5 g, and is adapted for taking and transmitting measurements continuously at time intervals of less than 1 second. In fact, it is sometimes advantageous to match the working frequency of the receiver with the working frequency of the satellite positioning module. Continuous follow-up of the weight of the agricultural material harvested during the task can thereby be performed.

In another preferred embodiment of the invention, the robotic device comprises a vertical fixing structure comprising a first spar which projects in a direction perpendicular to the platform and a second spar located in a manner perpendicular to the first spar at the end opposite the attachment with the platform, i.e., a T-shaped structure which is placed substantially perpendicular (at an angle comprised between 80° and 100°) to the platform. Furthermore, in this preferred embodiment of the invention, the two primary locating devices and/or image acquisition means are arranged on said structure, such that they can be located at a height similar to the height of the user.

In another preferred embodiment of the invention, the locating devices comprise ultra-wideband frequency equipment. This equipment can be used to determine the position and orientation of the corresponding user with respect to the robotic system/device or platform by means of trilateration calculations.

In another preferred embodiment of the invention, the mobile platform comprises at least three wheels, a battery, and at least one traction motor having a power sufficient for moving the platform in a stable manner across surfaces with a slope of more than 35%. This is particularly relevant as the device is conceived to travel over irregular terrain corresponding to farms. Therefore, it requires certain stability, provided by the set of at least three wheels, autonomy to perform the task without the need for successive and tedious reloading operations, provided by the battery, and the possibility of being moved over terrain with large slopes, of more than 30%, provided by the traction motor.

In another preferred embodiment of the invention, the robotic device comprises a control architecture based on a Robot Operating System which allows an efficient control over the actuation of the device.

In another preferred embodiment of the invention, the secondary locating device is secured to a cord ring having an adjustable length. This allows the user to wear it hanging from their neck at an adjustable height, such that the user can place it at the same height as the primary devices assembled on the robotic device, the efficiency in the task performed by the system thus being improved.

In another preferred embodiment of the invention, the platform comprises a level maintenance system of the weighing sensor, which is very useful for stabilizing the weighing data during movement of the robotic device over sloped terrain.

In another preferred embodiment of the invention, the platform comprises at least two ultrasonic sensors to prevent damage to the crop in turns. These ultrasonic sensors in turn comprise communication means for communicating with the processing unit.

In another preferred embodiment of the invention, the assistance system additionally comprises a satellite positioning device in turn comprising communication means for communicating with the processing unit. Said satellite positioning device will preferably have a Real Time Kinematic (RTK) correction system, which increases the locating precision from meters to centimeters, as well as two integral antennas located on both sides of the platform which will allow both the static and the dynamic orientation to be known. This device is particularly advantageous, because on most farms working distances are in the order of centimeters in many cases.

Advantageously, in addition to the described assistance system, another object of the present invention is to provide a method or assistance method in agricultural tasks which, using a system such as the one described above in any of the embodiments of the invention, comprises performing the following steps:

> a) arranging the robotic device on the terrain;
> b) arranging the secondary locating device on a user;
> c) determining, using the processing unit, the position, orientation and distance of the user with respect to the robotic device using the data obtained by the primary locating devices and by the secondary locating device;
> d) determining, using the processing unit, the actuation of the robotic device based on the position, orientation and distance obtained in step c);
> e) executing, using the processing unit, the actuation determined in step d); and
> f) repeating steps c)-e) at regular time intervals until the termination of the task.

In another preferred embodiment of the invention, the assistance method in agricultural tasks described above can be extended if the system comprises image acquisition means, configured for gathering information about distance and/or depth, in turn comprising communication means for communicating with the processing unit and an article of clothing. Should these conditions be met:

> - carried out before step a) are a step g) for obtaining a data set comprising images taken by the image acquisition means in which appears the article of clothing; and a step h) for training an algorithm for separating pixels and calculating the distance comprised between the image acquisition means and the article of clothing using said data set;
> - carried out after step c) is a step i) for determining the position of the user with respect to the image acquisition means by processing the image obtained by said means using the processing unit and the algorithm trained in step h); and wherein
> - instead of step d), a step j) is carried out for determining, using the processing unit, the definitive position of the user by comparing the results obtained in steps c) and i), based on same, determining the actuation of the subsystem.

In an autonomous manner, i.e., without any human having to handle it during the task, the robotic device thereby safely follows the user to assist him or her in the tasks of loading goods, stopping when required for such purpose.

In another preferred embodiment of the invention, provided that the robotic device comprises a satellite locating system, prior to performing step f), the assistance method in agricultural tasks comprises the following steps:

> k) measuring the weight of the storage device and its content and determining if said weight is greater than a previously established threshold weight;
> l) if the weight measured in step k) is greater than the established threshold, transporting, by means of autonomous navigation using the data obtained by the satellite positioning system, the robotic device to a predetermined storage area and depositing the content of the storage device there; and
> m) transporting, by means of autonomous navigation using the data obtained by the satellite positioning system, the robotic device from the storage area to the position determined in step c) or i).

High efficiency in harvesting tasks is obtained by means of this method since the user only uses his or her skill in selecting the material and in the harvesting thereof, but it does not anticipate at any time the carrying or transport thereof, which is performed exclusively in an autonomous manner by the robotic device.

Finally, in another preferred embodiment of the invention, the assistance method in agricultural tasks, again provided that the robotic device comprises a satellite locating system, comprises performing the following steps:

- prior to step l), the weight measured in step k) and the position of the user determined in step c) or i) is recorded; and wherein
- after step f), the weight and position data are processed, and a production map of the farm is prepared from said data.

## DESCRIPTION OF THE DRAWINGS

The foregoing and other features and advantages will be more fully understood based on the detailed description of the invention, as well as the preferred embodiments referring to the attached drawings, in which:

- Figure 1 schematically corresponds to the system presented as a possible embodiment of the invention, where the robotic device with its different elements, the processing unit and the elements that can be worn by the user can be identified.

- Figure 2 shows an example of the segmentation of the pixels of an image obtained by means of the image acquisition device after the application of a separation algorithm.

- Figure 3a shows a schematic top view of a possible configuration of the robotic device and of the user, indicating all the relevant parameters and the reference system used for the preliminary calculation of distances and orientations of the elements of the system.

- Figure 3b shows a detail of Figure 3a for a simpler understanding of the configuration.

- Figure 4 shows the reference system of the robotic device.

- Figure 5 shows the flowchart of the method for obtaining the distance through the locating devices corresponding to a possible embodiment of the invention.

- Figure 6 corresponds to a diagram of the assignment of the signs of the angular velocities involved based on the position of the robotic device.

- Figure 7 shows the flowchart of the method for the decision-making and actuation of the robotic device corresponding to a possible embodiment of the invention.

- Figure 8 shows the results of the application of a Kalman filter for static positions.

### REFERENCE NUMBERS IN THE DRAWINGS

| | |
|---|---|
| (1) | Assistance system |
| (2) | Processing unit |
| (3) | Robotic device |
| (4) | Platform |
| (5) | Wheels |
| (6) | Weighing sensor |
| (7) | Storage device or case |
| (8) | Securing structure |
| (9) | T-shaped vertical structure |
| (10) | Image acquisition device |
| (11) | Primary locating devices or tags |
| (12) | User |

(continued)

| (13) | Secondary locating device or anchor |
|------|-------------------------------------|
| (14) | Article of clothing or vest |
| (15) | Ultrasonic sensors |
| (16) | Satellite positioning device |

## DETAILED DESCRIPTION OF THE INVENTION

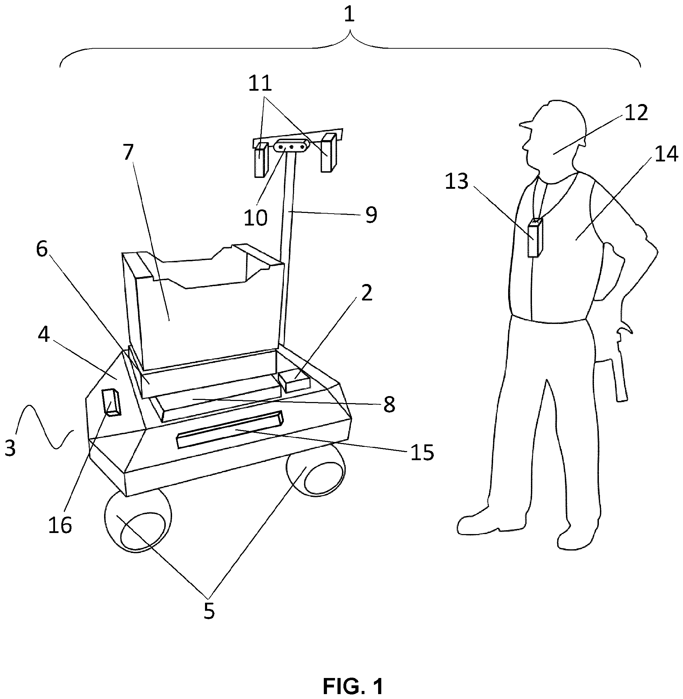

A detailed description of the invention based on FIGS. 1-8 herein is described below. Said description is provided for purposes of illustrating but not limiting the claimed invention.

FIG. 1 schematically depicts the elements constituting the assistance system (1) of the invention suitable for the use in agricultural tasks, preferably tasks of following, harvesting and monitoring. Said system (1) comprises a processing unit (2) configured for data acquisition, storage and processing and a robotic device (3) made up of a platform (4) with movement means such as wheels (5) on which a series of elements are arranged, such as:

- a weighing sensor (6), such as a commercial scale, provided with communication means for communicating with the processing unit (2);
- a storage element (7), such as a case, adapted for the temporary storage of agricultural products;
- a structure (8) comprising fixing means for being fixed to the platform (4), and securing means for the weighing sensor (6) and the storage element (7), such as clamps;
- a substantially vertical T-shaped structure (9), fixed to the platform (4);
- an image acquisition device (10) such as one or more cameras, assembled on the T-shaped structure (9) comprising communication means for communicating with the processing unit (2); and
- at least two primary locating devices (11) such as ultra-wideband radio frequency devices, assembled in the horizontal cross-member of the T-shaped structure (9) and separated from one another, provided with communication means for communicating with the processing unit (2);

Additionally, the system (1) comprises two elements suitable for being worn by a user (12):

- a secondary locating device (13) configured for sending and receiving data with the primary locating devices (11); and
- an article of clothing (14) such as a vest made of an intense color and reflective material, which are common in agricultural tasks for occupational safety reasons.

With these elements, the robotic device (3) of the system (1) of the invention is capable of performing, autonomously and without the need for human intervention, a controlled following of the user (12), always maintaining a distance from the user of at least 0.5 m. The robotic device (3) is therefore always close to the user (12), such that said user can perform the task of harvesting and placing the agricultural material in the storage element (7) of the system (1) without having to carry said material. Furthermore, the following is performed in a personalized manner, i.e., the robotic device (3) follows a single user (12) identified as a result of the secondary locating device (13) it carries. This opens up the door to each user (12) or worker on the farm to be assisted by one or more robotic devices (3), thereby facilitating the task of harvesting and increasing the efficiency of the farm.

To follow the user (12), and for the purpose of achieving a more robust following, the information provided by the image acquisition device (10), which allows locating the article of clothing (14) or vest that the user (12) wears and the information supplied by the 3 locating devices (11,13) used (two on-board the robotic device (3) and one on the user) is simultaneously used. The developed method allows knowing not only the distance from the robotic device (3) to the user (12), but also the orientation of the robotic device (3) with respect to said user (12).

First, identification of the article of clothing (14) of the user (12) is performed. To that end, there is used an image acquisition device (10) made up of two RGB cameras between which there is a certain separation, which allow not only obtaining an image of the article of clothing (14) worn by the user (12) but also the obtaining the distance thereof with respect to the device (10). Furthermore, the device (10) used also has an infrared camera, which allows the distance to be measured with greater precision, helping to mitigate the effect of sudden lighting changes in the operation of the RGB cameras.

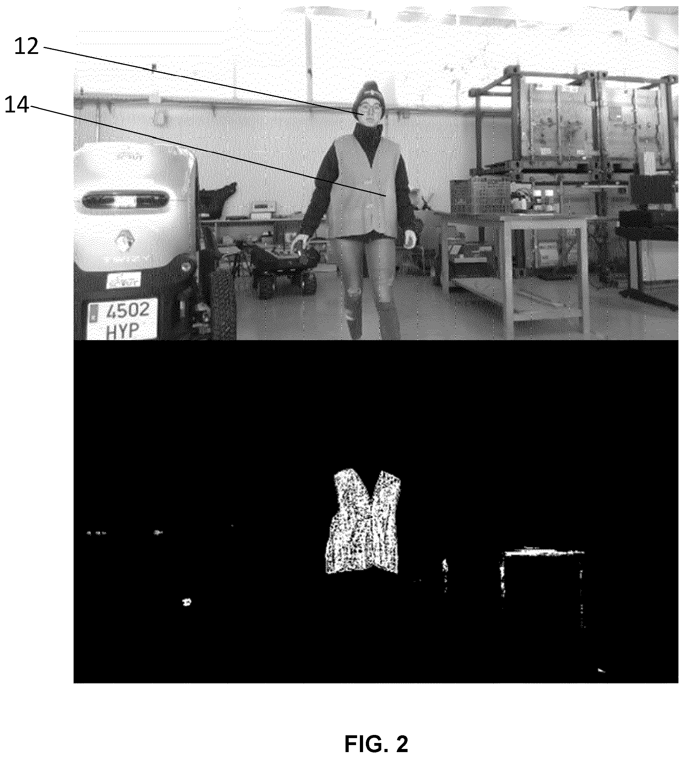

In this case, the identification of the article of clothing (14) is performed by means of a processing of the color image (RGB) the objective of which is to isolate the pixels in the image of said article of clothing (14) by color. To that end, work is done in the HSV (Hue Saturation Value) color space, and a mask is applied to each plane of the space which selects the values comprised between maximum and minimum coefficients, giving them a value of 1, whereas the rest will have a value of 0. This space is suitable for working with strong colors by separating the color information from the intensity information, so with the use of reflective vests in intense colors, preferably orange, particularly reliable results are obtained. It can be seen in FIG. 2 how the pixels having a 1 in the three planes used during image processing are classified as part of the article of clothing (14) used.

The coefficients for segmentation are obtained by means of a genetic algorithm well known in the state of the art, with the configuration shown in Table 1 and using a data set of 150 RGB images with a resolution of 1280x720 taken with the RGB camera-D used, both indoors and outdoors, on both sunny and cloudy days.

Table 1

| Parameter | Value |
|---|---|
| Individual | (H minimum, H maximum, S minimum, S maximum, V minimum, V maximum) |
| Lower limit | (0,0,0,0,0,0) |
| Upper limit | (1,1,1,1,1,1) |
| Individuals of the population | 40 |
| Selection function | Uniform stochastic |
| Crossover function | Scattered |
| Crossover fraction | 0.8 |
| Mutation function | Uniform |
| Mutation probability | 0.3 |
| Elitism | 1 individual |
| Termination criterion | Fitness = 0.99 or 200 generations without improvement or No. of final iterations reaching (1000) |

Fitness is defined as $v_{ab}/(v_{vb} + v_{fb})$, where $v_{ab}$ are the hits in the pixels of the vest (14), $v_{vb}$ are the target true values (pixels of the vest (14)) and $v_{fb}$ the target false values (they are not part of the vest (14)).

Once the coefficients for segmentation are available, the algorithm obtains the distance for each image by segmenting the pixels of the vest (14), by applying morphological erosion, dilation and erosion operators, in that order, to then look for the contour of the vest (14) in the binary image. The mean distance to each target pixel located in the vest (14), which corresponds with the estimate of the distance from the robotic device (3) to the user (12), is calculated with the associated depth image (resolution of 640x480).

Secondly, after having obtained the estimate of the distance to the user (12) using the image acquisition device (10), the position, the orientation and the distance from the user (12) with respect to the robotic device (3) are obtained by means of the locating devices (11,13). To that end, two primary devices (11) (on-board the robotic device (3)) called tags and a secondary device (13) worn by the user (12) called anchor are used. The three devices (11,13) are ultra-wideband (UWB) radio frequency emitters and receivers communicating with one another, allowing the triangulation of the position of the user (12).

The tags (11) are active elements which emit a Bluetooth signal which is received by the anchor (13). The distance between the user (12) and the robotic device (3) is estimated from the time of flight (ToF) and using the information provided by the two tags (11) integrated in the robotic device (3). In the event of the presence of several users (12) using this system (1), the distance that is received will be the distance of the devices that are found in the same network, which also allows other users to be identified. The frequency for updating these measurements is set at 10 Hz for steady-state operation and during movement, so new measurements are received every 100 ms. The range of variation of the measurements, even in steady-state, is 10 cm, which prevents the same measurement from continuously being obtained. Accordingly, a digital low-pass filter is implemented together with a moving average filter in order to reduce the existing noise.

A specific number of measurements prior to the moment of obtaining an output value for current measurements is taken into account with the low-pass filter. The filter has been configured with an order of 2 and cutoff frequency of 0.5 Hz so that every 5 measurements received are returned as attenuated measurements and the mean is obtained with the moving average filter. Therefore, at least five prior measurements of each tag (11) are required to enable applying the filter. The new measurements are therefore updated every 0.5 s and are used to estimate the position and orientation of the user (12) with respect to the geometric center (center of rotation and forward movement) of the robotic device (3).

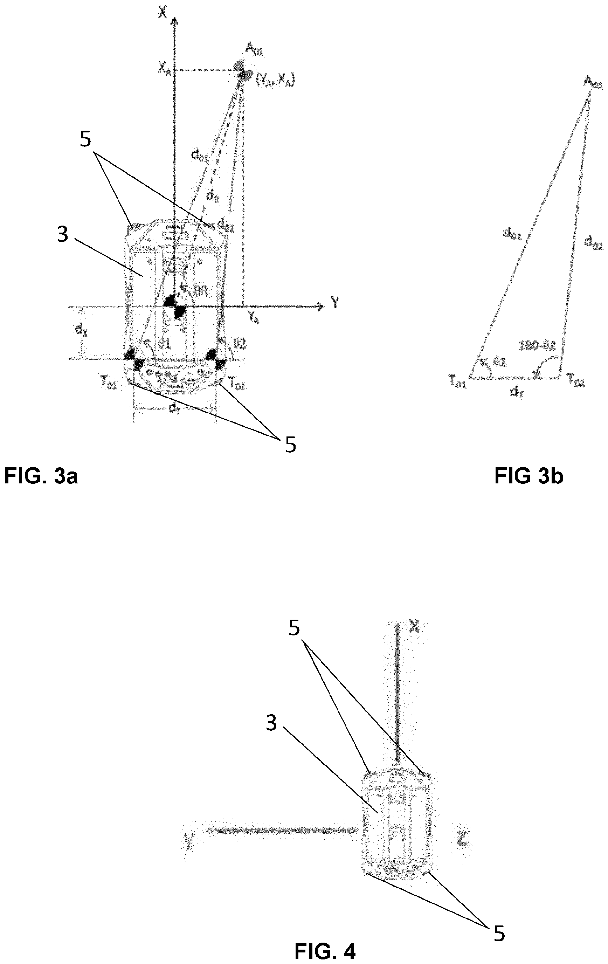

Said geometric center is used as the origin of the reference system used in the following steps, as can be observed in FIG. 3a. Finally, the distance between the robotic device (3) and the user (12) is calculated from the rear part of the first, where the image acquisition device (10) and the tags (11) are placed at a known distance $d_x$ from the geometric center (in the case of the selected platform (4), 0.308 m) and at a certain distance $d_T$ between them (in this case, 0.47 m) for the purpose of comparing the distances estimated with the different methods (UWB and image processing). The user (12), who will place the anchor (13) he or she wears, preferably hanging around their neck, at about the same height of the tags (11) as a result of a closed cord having an adjustable length, will always between the first two quadrants of the Cartesian plane, because if the user is outside the field of view of the image acquisition device (10), the robotic device (3) stops. The determination of the type of case is determined by

$$\begin{cases} if \ d01 \geq d02 \rightarrow \ A01 \ at \ Q1 \\ if \ d01 < d02 \rightarrow \ A01 \ at \ Q2 \end{cases}$$

where $d$01 and d02 are the distances between the anchor (3) and tag 1 and tag 2 (11), respectively, tag 1 (11) being the one arranged in negative values on the x-axis and tag 2 (11) the one arranged in positive values on the x-axis, as can be observed in FIG. 3a. $A$01 corresponds to the anchor, (13) Q1 and Q2 symbolize the first and the second quadrant, respectively.

The estimate based on the tags (11) varies based on the quadrant in which the user (12) is located. For example, for the first quadrant, the estimates of distances d01 and d02 form the triangle shown in FIG. 3b, where the angle forming the line connecting the two tags (11) with the line forming tag 1 (11) with the anchor (13), $\theta_1$, and distances $Y_A$ and $X_A$ to the anchor (13) A01 from the geometric center of the robotic device (3) are obtained from basic trigonometric ratios according to the configuration of the figure, as well as the orientation $\theta_R$ and the distance $d_R$ at which the anchor (13) $A$01 is located with respect to the center of the robotic device (3).

Once these operations have been performed, and after transforming the position, orientation and distance of the anchor (13) to the robotic device (3) with respect to the reference system of the latter, defined as shown in FIG. 4, a Kalman filter is applied to correct and estimate the coordinates of position x and y for the purpose of smoothing the measurements and even further reducing their variation, particularly in the static position, preventing the pitching which could occur in the robotic device (3) when following the user (12).

For this specific case and using as a reference the filter applied for the UWB devices (11, 13) of the invention, there will be two state variables corresponding with positions x and y of the user (12) with respect to the robotic device (3), and constant velocity model will be used as an approximation of the high reactive behavior of the user (12), since it is impossible to know the user's movement velocity. Therefore, the update frequency of the measurements $d_t$, which is 0.5 s, including the prior filter, is established as the velocity of position variables x and y.

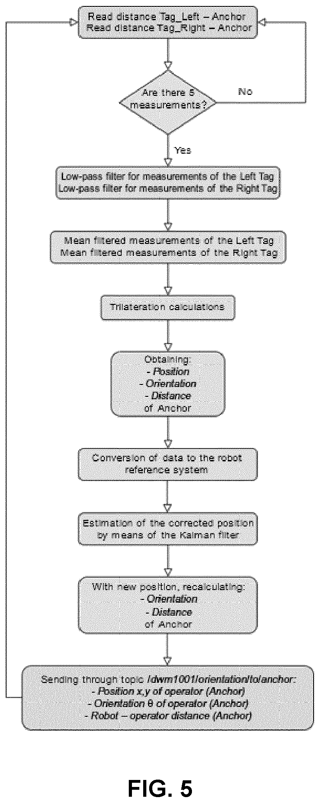

FIG. 5 shows the flowchart which includes all the steps to be followed to obtain the position, orientation and distance of the user (12) with respect to the robotic device (3) by means of the locating devices (11, 13).

Once the information necessary for following the user (12) has been obtained, the control method for controlling movement of the robotic device (3) is implemented. To that end, the decision is made to act on the linear velocity for the x-axis and on the angular velocity on the z-axis (defined in FIG. 3a, 3b and 4 as exiting the plane of the paper), such that there will always be assigned values for both.

To assign both the modulus and the direction of angular velocity corresponding to the robotic device (3), the following parameters are taken into account: the angle of rotation on the z-axis of the device itself ($\theta_{robot}$), the angle θ of the user (12) ($\theta_{user}$) with respect to the device, obtained from the UWB equipment (11, 13), and an admissible orientation error tolerance of 8.6° (0.15 rad).

A case-by-case control is performed for angular velocity, distinguishing 3 possible situations:

$$\begin{cases} if \ |\theta_{user}| \leq tolerance \rightarrow |\omega| = 0 \ rad/s \\ if \ |\theta_{user}| \leq 30° \rightarrow |\omega| = 0.6 \ rad/s \\ if \ |\theta_{user}| > 30° \rightarrow |\omega| = 0.7 \ rad/s \end{cases}$$

The user (12) is always located opposite the robotic device (3) (first or second quadrant) as set forth above, so short, rapid movements are required. To that end, the strategy consists of applying a slightly greater velocity when a larger angle of rotation is required.

In order to decide on the direction of rotation between clockwise or counterclockwise, it is necessary to take into account the reference system of the robotic device (3). A clockwise rotation will have a sign of negative ω y, while for a counterclockwise rotation it will have a positive sign.

Lastly, by means of a comparison of the value $\theta_{robot}$, given by its odometry (estimate of the position of wheeled vehicles during navigation in which information about wheel rotation is used to estimate changes in position over time), and the value $\theta_{user}$ with respect to same (added to) $\theta_{robot}$, the different situations which arise and the direction of the corresponding velocity in each of them are:

- $\theta_{robot}> 0$: the robotic device (3) is in the second quadrant:

$$\begin{cases} if\ \theta_{user} \leq 0 \rightarrow \omega < 0. \\ if\ \theta_{user} > 0\ and\ \theta_{robot} > \theta_{user} \rightarrow \omega < 0. \\ if\ \theta_{user} > 0\ and\ \theta_{robot} < \theta_{user} \rightarrow \omega > 0. \end{cases}$$

- $\theta_{robot}< 0$: the robotic device (3) is in the first quadrant:

$$\begin{cases} if\ \theta_{user} \geq 0 \rightarrow \omega > 0. \\ if\ \theta_{user} < 0\ and\ \theta_{robot} > \theta_{user} \rightarrow \omega > 0. \\ if\ \theta_{user} < 0\ and\ \theta_{robot} < \theta_{user} \rightarrow \omega < 0. \end{cases}$$

- $\theta_{robot}= 0$: the robotic device (3) is at the origin:

$$\begin{cases} if\ \theta_{user} > 0 \rightarrow \omega > 0. \\ if\ \theta_{user} < 0 \rightarrow \omega < 0. \end{cases}$$

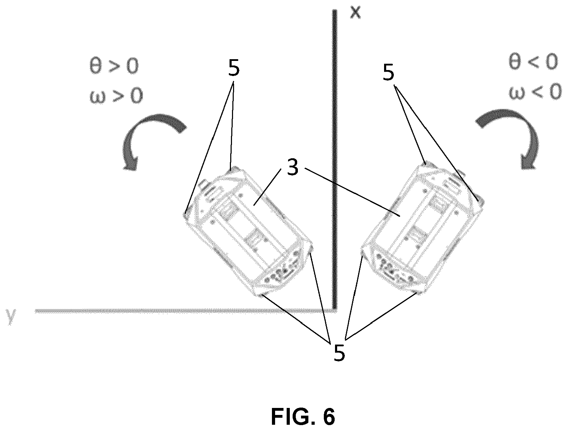

These configurations can be observed in FIG. 6.

As for the linear velocity, its value can be determined by a proportional controller *linear v.x* = 0.5 * *distance_operator* where the constant value 0.5 has been experimentally set.

Once the velocity assignment convention is established, the logic or the operation of the robotic device (3) and its behavior can be divided into 3 large blocks, performed in a parallel manner: the weighing block, the information synchronization block and the decision-making and action block. While the weighing block operates independently, the information gathering blocks of all sensors and the one that performs the decision making and sends the action orders to the robotic device (3) are executed in parallel and interconnected.

Information from the image acquisition device (10) and information from the UWB devices (11, 13), as well as the odometry of the robotic device (3), are received in a synchronized manner in the information synchronization block. With all the information, the distance from the robotic device (3) to the anchor (13) is received first. Next, the process is repeated with the orientation data for of the anchor (13) and that of the robotic device (3). This data added to the orientation provided by the anchor (13) allows the angle of the user (12) according to a reference system of the robotic device (3) to be known when said device is moving. Then, the images obtained by the image acquisition device (10) are used to obtain the distance to the user (12) provided. At this point, all the available data is compared to determine the definitive distance to be used in the following method.

The distance to the user (12) obtained as a result of the locating devices (11, 13), the distance to the user (12) obtained as a result of the image acquisition device (10), the orientation of the robotic device (3) and the orientation of the user (12) are managed through the parameter server of the Robot Operating System.

The decision-making and action block communicates with the former and is in charge of generating the velocity control orders. There are three operating options:

- Situation 1: there is no distance determined by the image acquisition device (10). If the value of the distance to the user (12) determined by the image acquisition device (10) is nil/empty, it means that no user (12) has been detected or that, in the case of having detected a small region or object compatible with a user (12), the size thereof is not considered relevant. In this case, the robotic device (3) stops by means of a linear velocity = 0 and angular velocity = 0. The robotic device (3) thereby remains stopped when the user (12) is near it or is placing the agricultural material in the case (7) outside the angle of view of the image acquisition device (10).

- Situation 2: distances to the user (12) determined by the image acquisition device (10) and the anchor (13) do not present a large difference. It is considered to be in a situation where the difference is less than 2 m. In this case, if the difference between both is more than 0.3 meters, the value of the anchor (13) is taken as the value of the distance to the user (12). For smaller values, the distance determined by the image acquisition device (10) is taken as a distance to the user (12). Once the value of the distance is chosen, it is checked to determine if it is less than or equal to 0.5 m. If the answer is yes, the robotic device (3) is close enough to the user (12) and stops. Otherwise, velocities are calculated to generate the following behavior. For the case of the angular velocity, first it is checked to determine if the orientation of the user (12) is within the margin of the set tolerance angle. When this occurs, it is considered that the robotic device (3) is centered enough to move forward in a linear manner, and therefore angular velocity = 0. If the answer is no, the modulus and the direction of the angular velocity are obtained, and a linear velocity is calculated.

- Situation 3: distances to the user (12) determined by the image acquisition device (10) and the anchor (13) are different. This latter situation is mainly contemplated to increase safety of the user (12) and prevent confusions with the person that the robotic device (3) should actually be following. This occurs when the difference between the distances obtained is greater than the established threshold of 2 m. In this case, the robotic device (3) stops, sending the linear velocity set point = 0 and angular velocity set point = 0.

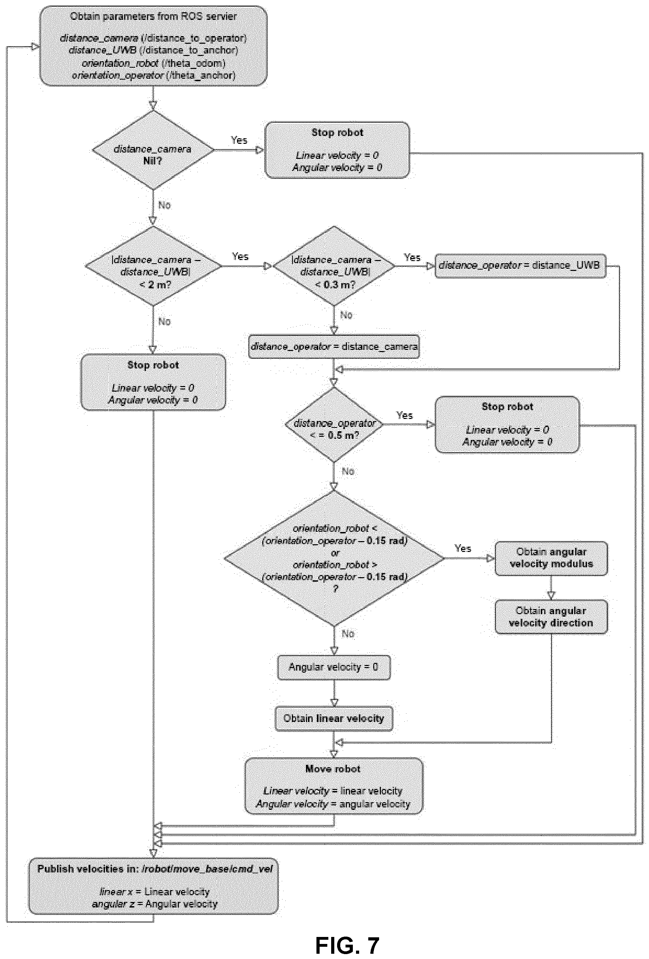

Once the action of the robotic device (3) has been determined according to the casuistry found when measuring and calculating the different distances and orientations involved, the movement of the device is executed through the processing unit (2) in which all the calculations are performed and decisions are made automatically as a result of its pre-programming. The complete decision-making and action process can be seen in FIG. 7.

As evidence of the correct operation of the system (1), experiments in controlled environments have been performed. For the evaluation of the low-pass filter with the greatest error reduction, filters of order 2 or 3 with an intermediate or low cutoff frequency were selected for experimentation. With a user (12) wearing the anchor (13) and article of clothing (14) and located at a distance of 1.4 m from the robotic device (3), measurements were taken at a position of 0° (0 rad) with respect to the device (3) and a position of 45° (0.7854 rad) at a distance of 1.4 m located to the left and right of the device (3), and the orientation and position error were calculated from same. Taking into account that both the placement of the robotic device (3) and the orientation of -45° and 45° are not entirely accurate, the filter of order 2 and cutoff frequency of 0.5 Hz presents a lower error in orientation, while the filter of order 2 and cutoff frequency of 0.3 Hz achieves higher precision in distance. However, the former is chosen since the distance most used by the robotic device (3) is that of the image acquisition means (10), while the user's orientation reference depends only on the locating devices (11, 13).

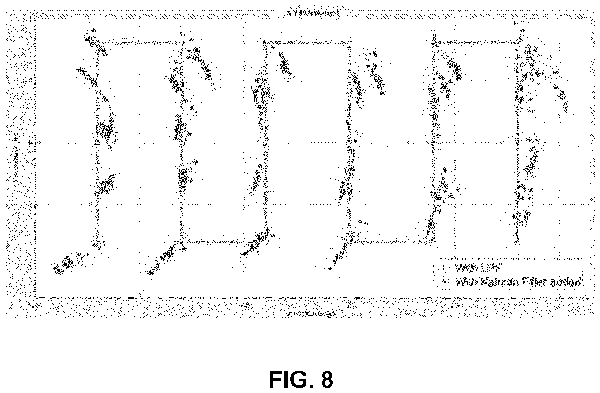

A second experiment was performed to quantify the impact of the addition of the Kalman filter in the previous two and in the stability of the position data. The robotic device (3) was positioned with its center at a position of (0.0) m and markers with the actual position, varying 0.4 m in one of the two plane axes, on the ground. The user (12) was stationary for about 10 measurements. FIG. 8 shows the results of such a test comparing the data obtained with and without the application of the Kalman filter, where the line shows the theoretical path and measurement points, where empty circles show the position results using only the low-pass filter and solid circles show the position results with the addition of the Kalman filter.

The Root Mean Squared Error was used as a metric to calculate the error of the positions and the distance between the user (12) and the robotic device (3) of these measurements with and without the application of the filter.

The Kalman filter correction is reduced to values in the order of millimeters. This is taking into account that the calculated errors, even using only the low-pass filter, have very small values, except for the y-axis, which is about 17 cm. However, the observation of a smoothing of the dispersion of the static measurements indicates that it works adequately to be applied to situations where both the robotic device (3) and the user (12) carrying the anchor (13) are moving.

Finally, to check the general operation of the robotic device (3), two types of experiments have been performed: 1) evaluation of following indoors to check the behavior of the system (1) in the presence of several users (12) and objects that could induce confusion; and 2) evaluation of following outdoors to check the response to the presence of sunlight and associated lighting changes.

Indoors, it can be seen that when the user (12) encounters the anchor (13) in front of the robotic device (3), following is performed correctly with sufficiently stable orientation data so that the frontal forward movement occurs without making any unnecessary turn. However, in the event of extremely sudden turns or movements and despite the action of the Kalman filter, the robotic device (3) moves forward with a small turning radius until the stability of the user (12) allows it to do so frontally. In addition, it is corroborated that, in the presence of other objects of the same color or other operators with the same article of clothing (14), the robotic device (3) identifies the assigned user (12) without any problem.

After performing the same experiment in an outdoor environment and on terrain with an uneven surface, a difference is observed due to the vibrations that occur on the structure (9) supporting the image acquisition device (10) and the tags (11). While these vibrations do not affect the color segmentation of the article of clothing (14) or the measurement of distance by the image acquisition device (10), they do affect the calculation of orientation by the locating devices (11, 13), especially when the user (12) is oriented laterally. In these cases, and occasionally, the robotic device (3) does not move forward in a totally frontal direction, a situation that must be taken into account in the case of working in crops with very narrow rows. With respect to the direct incidence of the sun, in extreme cases in which the distance data is not obtained correctly, the reasoning of the robotic device (3) forces to use as a reference the distance given by the locating devices (11, 13) without any major inconvenience.

In general, the reasoning and decision-making performed by the robotic device (3) are suitable and cover all possibilities with a fast response time matching that of the user (12). In addition, safety is maximized since the robotic device (3) stops at the set distance of 0.5 m and remains stopped as long as the distance does not increase.

Additionally, in order to improve the precision of the weighing system on uneven terrain, a level maintenance system for the weighing sensor (6) is incorporated in the platform (4), which allows the robotic device (3) to move over terrain of this type and/or with slopes, while the load is kept stable, balanced and without affecting the weighing process. Alternatively, a correction model of the alterations in the weighing is implemented based on information supplied by an inertial measurement unit (IMU) comprised in the storage element (7) in which the material is deposited.

On the other hand, in order to improve the measurements made taken the UWB equipment (11, 13) and to prevent the robotic device (3) from entering the crops when making the necessary turns to follow the user (12), two ultrasonic sensors (15) are incorporated on both sides of the device (3), with which it is possible to detect when it is very close to the crop lines, and thus make the decision that, in the case of having to make a turn, it simply moves forward in a frontal way. This is a viable solution to avoid damaging the hardware and the crop or the material with an unwanted collision.

Lastly, the robotic device (3) is provided with a satellite positioning system (16), such as a GPS, which comprises means of connection with the processing unit (2), and with which it is possible to obtain the coordinates of the location of the device (3). Once connected, the positioning data is captured and transformed from the latitude and longitude coordinate format to the Universal Transverse Mercator (UTM) coordinate format, i.e., to coordinates expressed in meters, and relative to the position of the robotic device (3) with respect to North, East (South, West).

In this way, this positioning data can be used in different functionalities that the system (1) can implement. The first of these is to prepare a weighing record of the material contained in the storage element (7) according to the position of harvest thereof. Thus, once the weighing sensor (6) is turned on, the weight data in kg is received as a result of the communication means for communicating with the processing unit (2) that it includes. Then, an initial tare is performed to remove the weight of the storage element (7) already fixed on the platform (4). When the measurements begin to be received, a node will read the weight data each time a GPS coordinate is received. Finally, all this data will be recorded in the processing unit (2) for the subsequent generation of a harvest map, which will allow the amount of material harvested at each position to be known, and it will also allow the production of the different areas/lines of the crop to be analyzed.

The second functionality that allows the implementation of the positioning data acquisition is the transport of the material once the storage element (7) is full. As a result of the weighing sensor (6), when it sends to the processing unit (2) the information that it has detected that the weight of the material contained in the storage element (7) exceeds a certain preset threshold, the processing unit (2) sends an instruction to the robotic device (3) to be transported, using the location data, i.e. by means of autonomous navigation, to a predefined storage location. At said location, the material contained in the storage element (7) will be unloaded from the robotic device (3) to then either return to the coordinates from which it departed, i.e., with the same user (12) it previously followed, or to be assigned to a new user (12).

**Claims**

1. An assistance system (1) suitable for being used in agricultural tasks, **characterized in that** it comprises a processing unit (2), a robotic device (3) and a secondary locating device (13), wherein:

    - the processing unit (2) is configured for data acquisition, storage and processing;
    - the robotic device (3) comprises:

        - a platform (4) configured for being moved and configured for sending and receiving information with the processing unit (2), further comprising movement means;
        - a storage element (7) arranged on the platform;
        - a weighing sensor (6) comprising communication means for communicating with the processing unit (2) configured for measuring the weight of the storage element (7) and its content; and
        - at least two primary locating devices (11) arranged integrally with the platform (4); and

    - wherein the secondary locating device (13) is configured for sending and receiving data with the primary locating devices (11), the secondary locating device (13) being suitable for being worn by a user (12).

2. The assistance system (1) according to the preceding claim, additionally comprising:

   - image acquisition means (10), configured for gathering information about distance and/or depth, comprising communication means for communicating with the processing unit (2); and
   - an article of clothing (14).

3. The assistance system (1) according to the preceding claim, wherein the image acquisition means (10) comprise two RGB cameras and an infrared camera.

4. The assistance system (1) according to any of the preceding claims, comprising at least two robotic devices (3).

5. The assistance system (1) according to any of the preceding claims, wherein the weighing sensor (6) exhibits a precision equal to or greater than 5 g and is adapted for taking and transmitting measurements continuously at time intervals of less than 1 second.

6. The assistance system (1) according to any of the preceding claims, wherein the robotic device (3) comprises a vertical fixing structure (9) comprising a first spar forming an angle comprised between 80° and 100° with respect to the platform and fixed thereto and a second spar located in a manner perpendicular to the first spar at the end opposite the attachment with the platform on which the two primary locating devices (11) and/or the image acquisition means (10) are arranged.

7. The assistance system (1) according to any of the preceding claims, wherein the locating devices (11, 13) comprise ultra-wideband frequency equipment.

8. The assistance system (1) according to any of the preceding claims, wherein the platform (4) comprises at least three wheels (5), a battery, and at least one traction motor having a power sufficient for moving the platform (4) in a stable manner across surfaces with a slope of more than 35%.

9. The system (1) according to any of the preceding claims, wherein the secondary locating device (13) is secured to a cord ring having an adjustable length.

10. The assistance system (1) according to any of the preceding claims, wherein the platform (4) comprises a level maintenance system of the weighing sensor (6).

11. The assistance system (1) according to any of the preceding claims, additionally comprising a satellite positioning device (16) in turn comprising communication means for communicating with the processing unit (2).

12. An assistance method in agricultural tasks, comprising the use of a system (1) according to any of the preceding claims, **characterized in that** it comprises performing the following steps:

    a) arranging the robotic device (3) on the terrain;
    b) arranging the secondary locating device (13) on a user (12);
    c) determining, using the processing unit (2), the position, orientation and distance of the user (12) with respect to the robotic device (3) using the data obtained by the primary locating devices (11) and by the secondary locating device (13);
    d) determining, using the processing unit (2), the actuation of the robotic device (3) based on the position, orientation and distance obtained in step c);
    e) executing, using the processing unit (2), the actuation determined in step d); and
    f) repeating steps c)-e) at regular time intervals until the termination of the task.

13. The assistance method in agricultural tasks according to the preceding claim, wherein the system (1) comprises image acquisition means (10), configured for gathering information about distance and/or depth, in turn comprising communication means for communicating with the processing unit (2) and an article of clothing (14), wherein

    - carried out before step a) are a step g) for obtaining a data set comprising images taken by the image acquisition means (10) in which the article of clothing (14) appears; and a step h) for training an algorithm for separating pixels and calculating the distance comprised between the image acquisition means (10) and the article of clothing (14) using said data set;
- carried out after step c) is a step i) for determining the position of the user (12) with respect to the image acquisition means (10) by processing the image obtained by said means using the processing unit (2) and the algorithm trained in step h); and wherein
- instead of step d), a step j) is carried out for determining, using the processing unit (2), the definitive position of the user (12) by comparing the results obtained in steps c) and i), based on same, determining the actuation of the robotic device (3).

14. The assistance method in agricultural tasks according to any of claims 12-13 and comprising the use of a system (1) according to claim 11, wherein prior to step f) the following additional steps are performed:

k) measuring the weight of the storage element (7) and its content and determining if said weight is greater than a previously established threshold weight;
l) if the weight measured in step k) is greater than the established threshold, transporting, by means of autonomous navigation using the data obtained by the satellite positioning system (16), the robotic device (3) to a predetermined storage area and depositing the content of the storage element (7) there; and
m) transporting, by means of autonomous navigation using the data obtained by the satellite positioning system (16), the robotic device (3) from the storage area to the position determined in step c) or i).

15. The assistance method in agricultural tasks according to the preceding claim comprising the use of a system (1) according to claim 11, wherein

- prior to step l), the weight measured in step k) and the position of the user (12) determined in step c) or i) is recorded; and wherein
- after step f), the weight and position data are processed, and a production map of the farm is prepared from said data.

**FIG. 1**

12

14

FIG. 2

FIG. 3a

FIG 3b

FIG. 4

```
Read distance Tag_Left – Anchor
Read distance Tag_Right – Anchor
```

Are there 5 measurements? — No

Yes

```
Low-pass filter for measurements of the Left Tag
Low-pass filter for measurements of the Right Tag
```

```
Mean filtered measurements of the Left Tag
Mean filtered measurements of the Right Tag
```

Trilateration calculations

```
Obtaining:
- Position
- Orientation
- Distance
of Anchor
```

```
Conversion of data to the robot
reference system
```

```
Estimation of the corrected position
by means of the Kalman filter
```

```
With new position, recalculating:
- Orientation
- Distance
of Anchor
```

```
Sending through topic /dwm1001/orientation/to/anchor:
- Position x,y of operator (Anchor)
- Orientation θ of operator (Anchor)
- Robot – operator distance (Anchor)
```

## FIG. 5

FIG. 6

FIG. 7

## FIG. 8

Europäisches
Patentamt

European
Patent Office

Office européen
des brevets

# EUROPEAN SEARCH REPORT

**Application Number**

EP 22 38 2477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/220040 A1 (LONDON JUSTIN [US]) 3 August 2017 (2017-08-03) * paragraphs [0003] - [0005], [0013], [0021] - [0027], [0032], [0038], [0058], [0059]; figure 1 * | 1,3-7,9, 11 | INV. G05D1/02 |
| X | US 2019/094857 A1 (JERTBERG ERIK [US] ET AL) 28 March 2019 (2019-03-28) * paragraphs [0013], [0014], [0028], [0033], [0036], [0039] - [0045], [0058]; figure 1 * | 1-15 | |
| X | US 2022/024486 A1 (SCOTT TERRY [US] ET AL) 27 January 2022 (2022-01-27) * paragraphs [0009], [0062], [0103]; figure 1 * | 1-13 | |

| | |
|---|---|
| | TECHNICAL FIELDS SEARCHED (IPC) |
| | G05B G05D |

The present search report has been drawn up for all claims

| Place of search | Date of completion of the search | Examiner |
|---|---|---|
| The Hague | 1 November 2022 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 2477

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2022

| Patent document cited in search report | | Publication date | Patent family member(s) | | Publication date |
|---|---|---|---|---|---|
| US 2017220040 | A1 | 03-08-2017 | NONE | | |
| US 2019094857 | A1 | 28-03-2019 | NONE | | |
| US 2022024486 | A1 | 27-01-2022 | AU | 2019404207 A1 | 15-07-2021 |
| | | | EP | 3899683 A1 | 27-10-2021 |
| | | | US | 2022024486 A1 | 27-01-2022 |
| | | | WO | 2020132233 A1 | 25-06-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **FENG, Q. et al.** Design and test of robotic harvesting system for cherry tomato. *International Journal of Agricultural and Biological Engineering,* 2018, vol. 11 (1), 96-100
- **ARAD, B. et al.** Development of a sweet pepper harvesting robot. *Journal of Field Robotics,* 2020, vol. 37 (6), 1027-1039
- **XIONG, Y. et al.** An autonomous strawberry-harvesting robot: Design, development, integration, and field evaluation. *Journal of Field Robotics,* 2020, vol. 37 (2), 202-224
- **WILLIAMS, H. et al.** Improvements to and large-scale evaluation of a robotic kiwifruit harvester. *Journal of Field Robotics,* 2020, vol. 37 (2), 187-201
- **BIRRELL, S. et al.** A field-tested robotic harvesting system for iceberg lettuce. *Journal of Field Robotics,* 2020, vol. 37 (2), 225-245
- **VROCHIDOU, E. et al.** An Autonomous Grape-Harvester Robot: Integrated System Architecture. *Electronics,* 2021, vol. 10 (9), 1056
- **PENG, C. et al.** A strawberry harvest-aiding system with crop-transport co-robots: Design, development, and field evaluation. *arXiv:2107.13063,* 2021
- **JOHAN F. et al.** Raspberry-robotic and autonomous systems for berry production. *Mechanical Engineering,* 2018, vol. 140 (06), S14-S18